(19) Europäisches Patentamt / European Patent Office / Office européen des brevets

(11) **EP 2 989 480 B1**

(12) **EUROPEAN PATENT SPECIFICATION**

(45) Date of publication and mention of the grant of the patent:
**24.07.2019  Bulletin 2019/30**

(21) Application number: **14722385.3**

(22) Date of filing: **25.04.2014**

(51) Int Cl.:
**G01S 5/02** (2010.01)        **G01S 11/06** (2006.01)
**G01S 5/14** (2006.01)

(86) International application number:
**PCT/NL2014/050272**

(87) International publication number:
**WO 2014/175738 (30.10.2014 Gazette 2014/44)**

(54) **SPACE-BASED RSS LOCALIZATION**

RAUMBASIERTE RSS-LOKALISIERUNG

LOCALISATION RSS FONDÉE SUR L'ESPACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2013  NL 2010707**

(43) Date of publication of application:
**02.03.2016  Bulletin 2016/09**

(73) Proprietor: **Universiteit Twente
7522 NB  Enschede (NL)**

(72) Inventors:
• **HAVINGA, Paul
  NL-7597 LW Saasveld (NL)**
• **DIL, Bram Jeroen
  NL-7545 GM Enschede (NL)**

(74) Representative: **Jacobs, Bart et al
Arnold & Siedsma
Bezuidenhoutseweg 57
2594 AC The Hague (NL)**

(56) References cited:
• **SUMATHI R ET AL: "RSS-based location estimation in mobility assisted wireless sensor networks", INTELLIGENT DATA ACQUISITION AND ADVANCED COMPUTING SYSTEMS (IDAACS), 2011 IEEE 6TH INTERNATIONAL CONFERENCE ON, IEEE, 15 September 2011 (2011-09-15), pages 848-852, XP031990341, DOI: 10.1109/IDAACS.2011.6072891 ISBN: 978-1-4577-1426-9**
• **DIL B J ET AL: "RSS-based self-adaptive localization in dynamic environments", INTERNET OF THINGS (IOT), 2012 3RD INTERNATIONAL CONFERENCE ON THE, IEEE, 24 October 2012 (2012-10-24), pages 55-62, XP032297310, DOI: 10.1109/IOT.2012.6402304 ISBN: 978-1-4673-1347-6**
• **HYO-SUNG AHN ET AL: "Environmental-Adaptive RSSI-Based Indoor Localization", IEEE TRANSACTIONS ON AUTOMATION SCIENCE AND ENGINEERING, IEEE SERVICE CENTER, NEW YORK, NY, US, vol. 6, no. 4, 1 October 2009 (2009-10-01), pages 626-633, XP011331857, ISSN: 1545-5955, DOI: 10.1109/TASE.2008.2009126**

**Description**

The present invention relates to a method and a device for localization of a node having an unknown position. More in particular, the present invention relates to a method and a device in which a mobile blind node is used to determine the position of a fixed blind node within a localization area, wherein the fixed blind node is configured to exchange a signal with the mobile blind node.

Such method and device are known from the art. For instance, a method is known in which a mobile node conducts Received Signal Strength (RSS) measurements based on signals transmitted by a fixed blind node. These measurements are performed at different positions and distances. At each position, the position of the mobile node is known using GPS data. The mobile is therefore not considered as being blind in the context of the present invention.

The environment of the fixed blind node is described using a propagation model. This model describes in a parameterized manner how the received signal strength depends on the distance from the transmitter of that signal. Hence, given a measured RSS, a distance between the mobile node and fixed blind node can be determined. By combining several different measurements at different positions, the position of the fixed blind node can be determined.

An important feature of any localization system is the accuracy with which the position of fixed blind node can be determined. There is ongoing trend to try and improve the accuracy.

In addition, the abovementioned system is not very suitable for indoor use due to the lack or inaccuracy of GPS signals.

A system for locating fixed blind nodes by measuring RSS from a mobile node is known from Sumathi R et al: "RSS-based location estimation in mobility assisted wireless sensor networks", in 6th International Conference on Intelligent Data Acquisition and Advanced Computing Systems (IDAACS), pp. 848-852, September 2011, XP031990341. A system for determining the position of a mobile blind note using RSS from reference nodes having known positions using a maximum likelihood estimator is known from Dil B et al: "RSS-based self-adaptive localization in dynamic environments", in 3rd IEEE International Conference on the Internet of Things (IOT), October 2012, pages 55-62, XP032297310.

It is therefore an object of the present invention to provide a RSS localization approach in which the abovementioned drawbacks do not occur or at least to a lesser extent.

This object has been achieved with a system for localization in accordance with the present invention which comprises a mobile blind node configured to move around in the localization area and to perform communication with the fixed blind node at different measurement positions of the mobile blind node. The system further comprises a localization unit to determine the position of the fixed blind node based on the communication.

According to the invention, the system is characterized in that it further comprises a plurality of reference nodes arranged in the localization area, each having a known position and being configured to perform communication with the mobile blind node at different measurement positions of the mobile blind node. The communication between each of the reference nodes and the mobile blind node and the communication between the fixed blind node and the mobile blind node comprises exchanging a signal and performing a Received Signal Strength (RSS) measurement of the exchanged signal. In addition, the localization unit is configured to determine the position of the fixed blind node and the different measurement positions of the mobile blind node using both the plurality of RSS measurements of signals exchanged between the fixed blind node and the mobile blind node and the plurality of RSS measurements of signals exchanged between each of the plurality of reference nodes and the mobile blind node.

The known system uses the GPS calculated position of the mobile node as a starting point of the calculation of the position of the fixed blind node. At a plurality of (known) measurement positions, the mobile node determines the RSS of the signal from the fixed blind node. Given an estimated position of the fixed blind node and a given propagation model, the RSS is also estimated. The position of the fixed blind node can be found by varying the estimated position of the fixed blind node such that the error between the measured RSS values and the corresponding estimated RSS values is minimized.

The applicant has realized that the accuracy of this system is limited by the accuracy of the GPS system and by the accuracy of the RSS measurements. The GPS system uses measurements in the time domain to determine the position of the mobile node. This system does not correlate with that of the RSS measurements. Even if the RSS measurements themselves could be infinitely accurate, the overall system accuracy would still suffer from GPS related inaccuracy. Similarly, even if the GPS system would be infinitely accurate, the overall system accuracy would still suffer from RSS related inaccuracy.

The present invention differs from the known system in that it only uses RSS measurements and therefore provides better accuracies.

Furthermore, the position of the mobile node need not be known. In that sense, the mobile node is referred to as a mobile blind node. It should be appreciated by the skilled person that the invention does not exclude the possibility that the mobile node does know its position, for instance by GPS. However, this position is not taken into account for calculating the position of the fixed blind node to avoid losing accuracy.

The fixed blind node and at least one reference node can be configured to transmit a respective signal, wherein the mobile blind node is configured to receive the signals from the fixed blind node and the at least one reference node and to perform the RSS measurements. Conversely, the mobile blind node may be configured to transmit a signal, wherein each of the plurality of reference nodes and the fixed blind node are configured to receive the signal from the mobile blind node and to perform the RSS measurements.

Within the concept of the present invention, it is not so important which node transmits or receives a signal. It is however important that a mobile node is used to obtain RSS measurements at different measurement positions of the mobile node.

At least one of the reference nodes may be configured to exchange a signal with the fixed blind node. In this case, the communication between the at least one reference node and the fixed blind node comprises exchanging a signal and performing a Received Signal Strength (RSS) measurement of the exchanged signal. The localization unit may be configured to determine the position of the fixed blind node taking into account the RSS measurement of the exchanged signal. For instance, these measurements can be used to construct a starting point for a subsequent optimization process in which the other measurements, which do depend on the position of the mobile blind node, are used.

The fixed blind node may be configured to transmit a signal. In addition, at least one reference node can be configured to receive the signal from the fixed blind node and to perform the RSS measurement.

The transmitting power of the fixed blind node, the mobile blind node and/or each of the plurality of reference nodes is preferably at least constant during at least a part of the RSS measurements. In most embodiments however, the power output of the transmitters of the fixed blind node, the mobile blind node and/or the reference nodes will be constant, at least during a measurement cycle. This power need not be known, as will be elucidated later.

The localization unit is preferably configured to determine the measurement positions at which the mobile blind node received and/or transmitted a signal for said RSS measurements during or after the determination of the position of the fixed blind node. Although the position of the mobile blind node is not required to determine the position of the fixed blind node, it is calculated when determining the position of the fixed blind node. As will be described later, the position of the mobile blind node during the different measurements is treated as a variable in an optimization process.

The system may be configured to simultaneously localize a plurality of fixed blind nodes and/or wherein the system comprises a plurality of mobile blind nodes.

The mobile blind node transmits to or receives signals from different nodes. During these measurements the mobile blind node may or may not move. Again, at that stage of the localization process, the positions of the mobile blind node need not be known. It is preferred however, to keep the movement of the mobile blind node small in relation to the distance to the relevant node during a measurement. Furthermore, it is advantageous to measure a cycle of RSS measurements using signals from all the nodes, or at least the nodes within range, in such a short time frame that the movement of the mobile blind node can be neglected and the same measurement position can be attributed to each of the RSS measurements in that cycle.

The localization unit can be configured to determine the position of the fixed blind node by calculating, for each reference node, a first difference between the measured RSS of the signal exchanged with the mobile blind node and an estimated RSS, wherein the estimation is based on a known or estimated transmitting power of the reference node and/or mobile blind node, the known position of the reference node, and estimated measurement positions of the mobile blind node. In addition, the localization unit may calculate, for the fixed blind node, a second difference between the measured RSS of the signal exchanged with the mobile blind node and an estimated RSS, wherein the estimation is based on a known or estimated transmitting power of the fixed blind node and/or mobile blind node, an estimated position of the fixed blind node, and estimated measurement positions of the mobile blind node. The localization unit may then determine the position of the fixed blind node by minimizing the sum of the plurality of first differences and second differences by varying at least the estimated position of the fixed blind node and the estimated measurement positions of the mobile blind node. In other words, the unknown measurement positions of the mobile blind node and the unknown position of the fixed blind node are variables by which the sum of the first and second differences is minimized. The value of the variables by which a minimum is achieved can be taken as the determined position of the fixed blind node and the measurement positions of the mobile blind node. In this manner, the measurement positions of the mobile blind node are a natural byproduct of the localization process.

The wording "difference between a and b" should be construed as indicating a function depending on a-b or on b-a. Typically, the absolute value |a-b| or the square $(a-b)^2$ is used. Other mathematical functions are not excluded.

The system may further comprise, for at least one reference node, calculating a third difference between the measured RSS of the signal exchanged with the fixed blind node and an estimated RSS, wherein the estimation is based on a known or estimated transmitting power of the fixed blind node and/or the at least one reference node, an estimated position of the fixed blind node, and the known position of the at least one reference node. The determining of the position of the fixed blind node may then comprise minimizing the sum of the plurality of first, second and third differences by varying at least the estimated position of the fixed blind node and the estimated measurement positions of the mobile blind node.

The estimated RSS of the signal exchanged between the mobile blind node and the fixed blind node, between the mobile blind node and each of the reference nodes, and/or between at least one reference node and the fixed blind node can be computed using a propagation model. Such model can be parameterized by at least one parameter. The aforementioned minimizing the sum of differences may then also include varying the at least one parameter. A typical example of a propagation model is the Log-Normal Shadowing Model. Examples of parameters to be varied are the path loss exponent and/or the relevant transmission power.

The minimizing may comprise varying at least one of a transmitting power of the fixed blind node, a transmitting power of the mobile blind node, and a transmitting power of at least one of the plurality of reference nodes. This removes the requirement that the transmitting power should be known prior to the measurement process. However, the skilled person should appreciate that by adding unknowns to the system, more reference nodes should be added and/or more measurements at different measurement positions are needed.

The signal from the fixed blind node, the signal(s) from the mobile blind node, and/or the signals from the references nodes are preferably each an electromagnetic signal carrying a unique identifier. The localization unit may then be configured to associate the identifier with the measured RSS of the signal carrying that identifier. The system may in this case further comprise a memory storing a correlation between the identifiers and the corresponding nodes, wherein the localization unit is able to access the memory. This memory may further comprise a correlation between the reference nodes and the positions of those nodes. The memory should allow the localization unit to determine which position of a reference node it should use to calculate an estimated RSS for that node. It also allows the localization unit to discriminate between a reference node and the fixed blind node. The memory may reside within the localization unit.

The mobile blind node, the fixed blind node, and/or at least one reference node may comprise a receiver for receiving the signals and for performing the RSS measurements and a transmitter for transmitting corresponding RSS measurement data to the localization unit. At least one of the reference nodes and/or the fixed blind node may comprise a receiver for receiving the RSS measurement data, wherein at least one reference node and/or fixed blind node are/is configured to relay the received RSS measurement data to the localization unit. The RSS measurement data preferably comprise at least one RSS measurement and the identifier corresponding to the node of which the transmitted signal was measured.

The system may be configured such that each of the reference nodes, the mobile blind node, and/or the fixed blind node transmit their signals in different time slots. To achieve this, the reference nodes and the fixed blind node may be synchronized or a protocol may be used to avoid signal collision between signals from different nodes. Several known protocols are available to the skilled person to implement this configuration. In an exemplary embodiment, each of the reference nodes, the mobile blind node, and/or the fixed blind node transmit their signal with the unique identifier in turn. Then, the relevant nodes will collect the RSS measurements of these nodes and transmit the collection with the identifiers to the localization unit, preferably via at least one reference node and/or fixed blind node. The reference nodes and/or fixed blind node may communicate wirelessly to the localization unit, albeit not interfering with the RSS measurements for instance using a different frequency band, or they may be connected by for instance Ethernet.

Within the context of the present invention, the arrangement of the memory and the localization unit is not crucial. For instance, the memory and the localization unit may all be integrated into the mobile node. Alternatively, both the memory and the localization unit may be part of dedicated hardware, such as a computer, connected to the reference nodes and/or blind node by means of a packed switched network connection. Given the amount of mobile phones available today, it is advantageous to implement the mobile blind node in a mobile phone, such as a so called smart phone. This can be implemented as a piece of software using the existing hardware of the phone. Applications are envisaged in which a plurality of mobile phone users contribute to the localization process. This may even be in the form of a background process such that normal phone operation is not distorted.

The localization area is preferably determined as an area defined by the most outer placed reference nodes, the convex hull determined by the reference nodes coordinates. Constraining the fixed and mobile blind node positions ensures that the system of equations provides a unique set of solutions and copes better with measurement noise.

According to a second, third, and fourth aspect, the present invention provides a mobile blind node, a localization unit, and a reference node as defined above, respectively.

According to a fifth aspect, the present invention provides a method for localization of a fixed blind node to be localized within a localization area, wherein the method comprises the steps of:

providing a plurality of reference nodes arranged in the localization area, each having a known position;
providing a mobile blind node;
moving the mobile blind node through the localization area and simultaneously measuring the Received Signal Strength (RSS) of signals exchanged between each of the reference nodes and the mobile blind node and signals exchanged between fixed blind node and the mobile blind node; and
determining the position of the fixed blind node and said different measurement positions of the mobile blind node using both the plurality of RSS measurements of signals exchanged between the fixed blind node and the mobile blind node and the plurality of RSS measurements of signals exchanged between each of the plurality of reference nodes and the mobile blind node.

The method preferably further comprises for each reference node, calculating a first difference between the measured RSS of the signal exchanged with the mobile blind node and an estimated RSS, wherein the estimation is based on a known or estimated transmitting power of the reference node and/or the mobile blind node, a known position of the reference node, and an estimated measurement position of the mobile blind node;

for the fixed blind node, calculating a second difference between the measured RSS of the signal exchanged with the mobile blind node and an estimated RSS, wherein the estimation is based on a known or estimated transmitting power of the fixed blind node and/or mobile blind node, an estimated position of the fixed blind node, and estimated measurement positions of the mobile blind node; and

determining the position of the fixed blind node by minimizing the sum of the plurality of first differences and second differences by varying at least the estimated position of the fixed blind node and the estimated measurement positions of the mobile blind node.

This method may be supplemented by features mentioned in conjunction with the system described above.

Next, the invention will be described in more detail using the appended figures, wherein:

Figure 1 illustrates an embodiment of the present invention;
Figure 2 illustrates the communication and measurement direction in the system of figure 1.

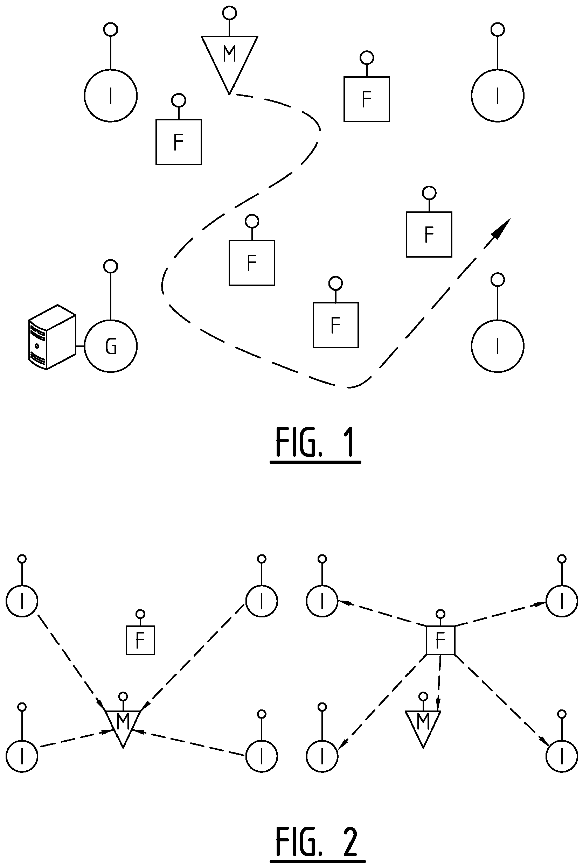

In the context of the present invention, a node is either a reference node or a blind node. Reference nodes know their position. Two types of reference nodes can be identified: (1) infrastructure nodes ('I' in Figure 1) and (2) gateways ('G' in Figure 1). The infrastructure nodes form the backbone of the network and transmit all measurements to the gateway. The gateway connects the wireless network to a server for centralized data processing. The server may comprise the localization unit and memory described above.

Blind nodes do not know their position and require localization. Two types of blind nodes can be identified based on their mobility characteristics: (1) fixed blind nodes ('F' in Figure 1) and (2) mobile blind nodes ('M' in Figure 1). Fixed blind nodes are fixed during the localization process. Mobile blind nodes are mobile and require real-time localization.

Figure 2 shows the communication direction and which nodes perform the required RSS measurements for localization. The reference nodes broadcast their ID and the mobile nodes listen to these messages and perform RSS measurements. The fixed blind nodes broadcast their ID and the reference nodes and mobile blind nodes listen to these messages and perform RSS measurements. All RSS measurements performed by the reference nodes and mobile nodes are forwarded to the localization server. The server processes this information to estimate the position of all blind nodes.

The communication protocol for the system of figure 1 uses two different channels, one for performing the RSS measurements (Broadcast Channel) and one for forwarding the RSS measurements (Data Channel). The Broadcast Channel is used by the reference nodes and fixed blind nodes to broadcast their identifiers (ID's) every 100ms. These messages are used for (1) RSS measurements for localization and (2) Network establishment. Every hundred milliseconds, the reference nodes and fixed blind nodes broadcast their ID. The reference nodes also broadcast their current hop count for updating their node neighborhood list and for determining the shortest path to the gateway. Only robust links are stored in the neighborhood list. Robust links are links that have an RSS above a certain threshold. The mobile blind node transmits its messages to the reference node that has the most robust link (highest RSS).

The Data channel is used for forwarding the localization measurements to the server. Communication in the data channel is ensured to be reliable by using the automatic ACK's in the IEEE 802.15.4 standard.

The network operates as described next. The mobile blind nodes listen to the messages in the broadcast channel. When a mobile blind node receives a message, it stores the ID, relative time of arrival, and measured signal strength. After a short period (set to one second), the mobile blind node switches to the data channel and forwards the collected localization measurements via the reference nodes to the localization server. The reference nodes form the wireless infrastructure and establish a mesh network to the nearest gateway. The routing is based on the hop-count. A message is forwarded to the node that is closer to the gateway and which has a robust link. Once a minute, the reference nodes listen to messages for 250ms in the broadcast channel for (1) updating their hop counts and neighborhood lists and (2) for performing RSS measurements to the fixed blind nodes. All these measurements are forwarded to the localization server. The fixed blind nodes broadcast their ID and go immediately into a deep sleep mode to reduce energy consumption. Energy consumption can further be reduced by increasing the time between consecutive broadcasts (once every few seconds). This does not affect the localization performance, but only decreases the convergence rate in time. The fixed blind nodes do not measure RSS to each other and save energy by doing so.

Next, the algorithm to determine the position of the fixed blind node will be described in detail.

Consider a wireless network that consists of R reference nodes (infrastructure and gateway nodes), F fixed blind nodes and one mobile blind node.

The positions of R reference nodes are referred to as $(x_1, y_1) .. (x_R, y_R)$. The positions of $F$ fixed blind nodes are referred to as $(x_{R+1}, y_{R+1}) .. (x_{R+F}, y_{R+F})$. One mobile blind node that does not know its location changes its location every time instance. The positions of the mobile blind node over $T$ time instances is identified by $(x_{M,1}, y_{M,1}) .. (x_{M,T}, y_{M,T})$. Here, the use of "^" indicates an estimated parameter.

In each individual time instance t, the mobile node measures the RSS to the reference nodes and fixed blind nodes.

RSS measurements to reference nodes are indicated as $RSS_{t,1} .. RSS_{t,R}$. RSS measurements to fixed blind nodes are indicated as $RSS_{t,R+1}..RSS_{t,R+F}$.

With these notations, the optimization problem is expressed by equation (1):

$$\min_{\theta} \sum_{t=1}^{T} \sum_{i=1}^{R} \left( \widehat{RSS}_{t,i} - RSS_{t,i} \right)^2$$

$$+ \sum_{t=1}^{T} \sum_{j=R+1}^{R+F} \left( \widehat{RSS}_{t,j} - RSS_{t,j} \right)^2$$

Here:

$$\widehat{RSS}_{t,i} = P_{d_0,i} - 10 \cdot n_i \cdot \log_{10} \sqrt{(\hat{x}_{M,t} - x_i)^2 + (\hat{y}_{M,t} - y_i)^2}$$

And:

$$\widehat{RSS}_{t,j} = P_{d0,j} - 10 \cdot n_j \cdot \log_{10} \sqrt{\left(\hat{x}_{M,t} - \hat{x}_j\right)^2 + \left(\hat{y}_{M,t} - \hat{y}_j\right)^2}$$

Here $P_{d0,i}$ $n_i$, $P_{d0,j}$ and $n_j$ represent the parameters of the Log-Normal Shadowing Model. It is assumed that these parameters are individually calibrated for each transmitter (reference nodes and fixed blind nodes). For simplicity, it is assumed that these parameters are calibrated before localization. However, these parameters can also be automatically calibrated during the localization process by including them also variables. Care should be taken to measure at enough measurement positions such that the number of unknowns does not become too large.

θ represents the set of parameters that minimizes Equation 1. This set consists of mobile and blind node positions:

$$\theta = \left\{ \hat{x}_{M,1}, \hat{y}_{M,1} \ldots \hat{x}_{M,T}, \hat{y}_{M,T}, \hat{x}_{R+1}, \hat{y}_{R+1} \ldots \hat{x}_{R+F}, \hat{y}_{R+F} \right\}$$

Equation 1 can be generalized to incorporate more than one mobile node by adding mobile node positions and RSS measurements. The localization algorithm uses Equation 1 to determine the unknown positions of all blind nodes, this includes positions of fixed and mobile blind nodes. Equation 1 can for instance be minimized using an iterative nonlinear large-scale optimizer, which is known in the art. Measurements between the reference nodes and the individual blind nodes are used to compute the start position of the individual blind nodes. Alternatively, these RSS measurements can be incorporated as a separate term in Equation 1.

It should be apparent for the skilled person that the present invention allows space based RSS measurements to be used for localization purposes without relying on GPS measurements to determine the positions of the mobile node. In particular, in situations where GPS signals are not accurate enough, such as indoor conditions, the present invention still allows accurate results to be achieved.

It should be apparent to the skilled person that various modifications can be made without departing from the present invention, the scope of which is defined by the appended claims.

For instance, according to the present invention, the measurement positions of the mobile blind node and the position of the fixed blind node are preferably determined in an optimization process, even more preferably in a single optimization process. This does not exclude that parts of the optimization are performed on different devices or performed at different times.

The measurement positions of the mobile blind node and the position of the fixed blind node are preferably determined simultaneously. This does not exclude that initial estimations of the position of the fixed blind node and/or the measurement positions of the mobile blind node can be made, for instance by using GPS-determined measurement positions of the mobile blind node. However, the optimization according to the invention to achieve accurate predictions on the positions uses the combination of RSS measurements performed on signals exchanged between the fixed blind node and the mobile blind node, between the reference nodes and the mobile blind node, and/or between the fixed blind node and the reference nodes to determine the measurement positions of the mobile blind node and the position of the fixed blind node simultaneously.

Different sets of RSS measurements may be employed to determine the positions of the various nodes. The number of measurements should be sufficient for the optimization algorithm to find a solution. These sets may have been acquired at different times or even using different mobile blind nodes. It may be advantageous to add time stamps to the RSS measurements in such a manner that the optimization may be restricted to RSS measurements obtained within a certain time frame. Additionally, sensors, such as movement indicators, may be provided which indicate whether one or more of the fixed blind node and reference nodes have moved. If such movement has been detected, in particular movement of the fixed blind node, the localization unit may be instructed to use only RSS measurements obtained after the movement. To this end, the RSS measurement data may include suitable tags, which are representative of the measurement results of the movement indicators.

**Claims**

1. A system for localization of a fixed blind node to be localized within a localization area, the system comprising:

    a mobile blind node configured to move around in the localization area and to perform communication with the fixed blind node at different measurement positions of the mobile blind node; and
    a localization unit to determine the position of the fixed blind node based on the communication;
    **characterized in that**
    the system further comprises a plurality of reference nodes arranged in the localization area, each having a known position and being configured to perform communication with the mobile blind node at different measurement positions of the mobile blind node, wherein said communication between each of the reference nodes and the mobile blind node and said communication between the fixed blind node and the mobile blind node comprises exchanging a signal and performing a Received Signal Strength, RSS, measurement of the exchanged signal;
    wherein the localization unit is configured to determine said position of the fixed blind node and said different measurement positions of the mobile blind node using both the plurality of RSS measurements of signals exchanged between the fixed blind node and the mobile blind node and the plurality of RSS measurements of signals exchanged between each of the plurality of reference nodes and the mobile blind node;
    wherein the measurement position of the mobile blind node is unknown during said RSS measurements or wherein the measurement position is known but not taken into account for determining the position of the fixed blind node.

2. The system according to claim 1, wherein the localization unit is configured to determine said position of the fixed blind node and said different measurement positions of the mobile blind node in an optimization process;
    wherein the optimization process preferably comprises varying an estimation of the position of the fixed blind node and an estimation of the different measurement positions of the mobile blind node to minimize a difference between the RSS measurements and RSS values calculated using said estimated positions.

3. The system according to any of the previous claims, wherein the fixed blind node and at least one reference node are configured to transmit a respective signal, wherein the mobile blind node is configured to receive the signals from the fixed blind node and the at least one reference node and to perform said RSS measurements or wherein the mobile blind node is configured to transmit a signal, and wherein each of the plurality of reference nodes and the fixed blind node are configured to receive the signal from the mobile blind node and to perform said RSS measurements.

4. The system according to any of the previous claims, wherein at least one of the reference nodes is configured to exchange a signal with the fixed blind node, said communication between the at least one reference node and the fixed blind node comprising exchanging a signal and performing a Received Signal Strength, RSS, measurement of the exchanged signal, wherein the localization unit is configured to determine the position of the fixed blind node taking into account the RSS measurement of the signal exchanged between the at least one reference node and the fixed blind node;

wherein the fixed blind node is preferably configured to transmit a signal, and wherein at least one reference node is configured to receive the signal from the fixed blind node and to perform said RSS measurement.

5. The system according to any of the previous claims, wherein the transmitting power of the fixed blind node, the mobile blind node and/or each of the plurality of reference nodes is at least constant during at least a part of the RSS measurements; and/or

wherein the localization unit is configured to determine the measurement positions at which the mobile blind node received and/or transmitted a signal for said RSS measurements during or after the determination of the position of the fixed blind node; and/or

wherein the system is configured to simultaneously localize a plurality of fixed blind nodes and/or wherein the system comprises a plurality of mobile blind nodes.

6. The system according to any of the previous claims, wherein the localization unit is configured to determine the position of the fixed blind node by:

for each reference node, calculating a first difference between the measured RSS of the signal exchanged with the mobile blind node and an estimated RSS, said estimation being based on the known or estimated transmitting power of the reference node and/or mobile blind node, the known position of the reference node, and estimated measurement positions of the mobile blind node;

for the fixed blind node, calculating a second difference between the measured RSS of the signal exchanged with the mobile blind node and an estimated RSS, said estimation being based on a known or estimated transmitting power of the fixed blind node and/or mobile blind node, an estimated position of the fixed blind node, and estimated measurement positions of the mobile blind node; and

determining the position of the fixed blind node by minimizing the sum of the plurality of first differences and the second differences by varying at least the estimated position of the fixed blind node and the estimated measurement positions of the mobile blind node;

the system preferably further comprising, in so far as depending on claim 4:

for at least one reference node, calculating a third difference between the measured RSS of the signal exchanged with the fixed blind node and an estimated RSS, said estimation being based on a known or estimated transmitting power of the fixed blind node and/or the at least one reference node, an estimated position of the fixed blind node, and the known position of the at least one reference node;

said determining of the position of the fixed blind node comprising minimizing the sum of the plurality of first, second and third differences by varying at least the estimated position of the fixed blind node and the estimated measurement positions of the mobile blind node;

wherein the estimated RSS of the signal exchanged between the mobile blind node and the fixed blind node, between the mobile blind node and each of the reference nodes, and/or between at least one reference node and the fixed blind node is preferably computed using a propagation model, wherein the propagation model is preferably parameterized by at least one parameter, wherein the minimizing comprises varying the at least one parameter and/or wherein the propagation model is preferably the Log-Normal Shadowing Model;

wherein the minimizing preferably comprises varying at least one of a transmitting power of the fixed blind node, a transmitting power of the mobile blind node, and a transmitting power of at least one of the plurality of reference nodes.

7. The system according to any of the previous claims, wherein the signal from the fixed blind node, the signal(s) from the mobile blind node, and/or the signals from the references nodes are each an electromagnetic signal carrying a unique identifier, wherein the localization unit is configured to associate the identifier with the measured RSS of the signal carrying that identifier, the system further comprising a memory storing a correlation between the identifiers and the corresponding nodes, said localization unit being able to access said memory;

wherein the memory preferably further comprises a correlation between the reference nodes and the positions of those nodes.

8. The system of any of the previous claims, wherein the mobile blind node, the fixed blind node, and/or at least one reference node comprises a receiver for receiving the signals and for performing the RSS measurements and a transmitter for transmitting corresponding RSS measurement data to the localization unit, wherein at least one of the reference nodes and/or the fixed blind node preferably comprises a receiver for receiving the RSS measurement data, wherein said at least one reference node and/or fixed blind node are/is configured to relay the received RSS measurement data to the localization unit, wherein, in so far as depending on claim 7, the RSS measurement data preferably comprise at least one RSS measurement and the identifier corresponding to the node of which the transmitted signal was measured; and/or

wherein each of the reference nodes, the mobile blind node, and/or the fixed blind node are configured to transmit their signals in different time slots; and/or

wherein the localization area is determined as an area defined by the most outer placed reference nodes.

9. A mobile blind node configured for use in a system for localization of a fixed blind node as defined in any of the previous claims, wherein the mobile blind node comprises a receiver for receiving an electromagnetic signal carrying a unique identifier from a node and for performing an RSS measurement on said signal, and a transmitter for transmitting corresponding RSS measurement data to a localization unit, said RSS measurement data comprising said RSS measurement and said unique identifier, wherein the mobile blind node is preferably implemented in a mobile phone;

wherein the mobile blind node is preferably configured for use in the system as defined in claim 6, wherein the mobile blind node comprises both the localization unit and the memory.

10. A localization unit configured for use in a system for localization of a fixed blind node as defined in any of the claims 1-8; **characterized in that**

said localization unit is configured to receive a plurality of RSS measurements of signals exchanged between the fixed blind node and the mobile blind node and a plurality of RSS measurements of signals exchanged between each of the plurality of reference nodes and the mobile blind node;

wherein the localization unit is configured to determine said position of the fixed blind node and said different measurement positions of the mobile blind node using both the plurality of RSS measurements of signals exchanged between the fixed blind node and the mobile blind node and the plurality of RSS measurements of signals exchanged between each of the plurality of reference nodes and the mobile blind node;

wherein the measurement position of the mobile blind node is unknown during said RSS measurements or wherein the measurement position is known but not taken into account for determining the position of the fixed blind node.

11. A reference node configured for use in a system for localization of a fixed blind node as defined in any of the claims 1-8, wherein the reference node comprises a receiver for receiving an electromagnetic signal carrying a unique identifier from a node and for performing an RSS measurement on said signal, and a transmitter for transmitting corresponding RSS measurement data to a localization unit, said RSS measurement data comprising said RSS measurement and said unique identifier.

12. A method for localization of a fixed blind node to be localized within a localization area, the method comprising:

providing a plurality of reference nodes arranged in the localization area, each having a known position;
providing a mobile blind node;
moving the mobile blind node through the localization area and simultaneously measuring the Received Signal Strength, RSS, of signals exchanged between each of the reference nodes and the mobile blind node and signals exchanged between fixed blind node and the mobile blind node; and
determining said position of the fixed blind node and said different measurement positions of the mobile blind node using both the plurality of RSS measurements of signals exchanged between the fixed blind node and the mobile blind node and the plurality of RSS measurements of signals exchanged between each of the plurality of reference nodes and the mobile blind node;
wherein the measurement position of the mobile blind node is unknown during said RSS measurements or wherein the measurement position is known but not taken into account for determining the position of the fixed blind node.

13. The method according to claim 12, wherein said determining of said position of the fixed blind node and said different measurement positions of the mobile blind node is performed in an optimization process, wherein the optimization process preferably comprises varying an estimation of the position of the fixed blind node and an estimation of the different measurement positions of the mobile blind node to minimize a difference between the RSS measurements and RSS values calculated using said estimations, and wherein more preferably the optimization process further comprises:

for each reference node, calculating a first difference between the measured RSS of the signal exchanged with the mobile blind node and an estimated RSS, said estimation being based on a known or estimated transmitting power of the reference node and/or the mobile blind node, a known position of the reference node, and an estimated measurement position of the mobile blind node;

for the fixed blind node, calculating a second difference between the measured RSS of the signal exchanged with the mobile blind node and an estimated RSS, said estimation being based on a known or estimated transmitting power of the fixed blind node and/or the mobile blind node, an estimated position of the fixed blind node, and an estimated measurement position of the mobile blind node; and

determining the position of the fixed blind node by minimizing the sum of the plurality of first differences and the second differences by varying at least the estimated position of the fixed blind node and the estimated measurement positions of the mobile blind node.

14. A system for localization of a fixed blind node to be localized within a localization area, the system comprising:

a mobile blind node configured to move around in the localization area and to perform communication with the fixed blind node at different measurement positions of the mobile blind node; and

a localization unit to determine the position of the fixed blind node based on the communication;

**characterized in that**

the system further comprises a plurality of reference nodes arranged in the localization area, each having a known position and being configured to perform communication with the mobile blind node at different measurement positions of the mobile blind node, wherein said communication between each of the reference nodes and the mobile blind node and said communication between the fixed blind node and the mobile blind node comprises exchanging a signal and performing a Received Signal Strength, RSS, measurement of the exchanged signal;

wherein the localization unit is configured to determine said position of the fixed blind node and said different measurement positions of the mobile blind node using both the plurality of RSS measurements of signals exchanged between the fixed blind node and the mobile blind node and the plurality of RSS measurements of signals exchanged between each of the plurality of reference nodes and the mobile blind node;

wherein at least one of the reference nodes is configured to exchange a signal with the fixed blind node, said communication between the at least one reference node and the fixed blind node comprising exchanging a signal and performing a Received Signal Strength, RSS, measurement of the exchanged signal, wherein the localization unit is configured to determine the position of the fixed blind node taking into account the RSS measurement of the signal exchanged between the at least one reference node and the fixed blind node.

15. The system according to claim 14, wherein the measurement position of the mobile blind node is unknown during said RSS measurements or wherein the measurement position is known but not taken into account for determining the position of the fixed blind node; and/or

wherein the localization unit is configured to determine said position of the fixed blind node and said different measurement positions of the mobile blind node in an optimization process, wherein the optimization process preferably comprises varying an estimation of the position of the fixed blind node and an estimation of the different measurement positions of the mobile blind node to minimize a difference between the RSS measurements and RSS values calculated using said estimated positions, and wherein the localization unit is more preferably configured to determine the position of the fixed blind node by:

for each reference node, calculating a first difference between the measured RSS of the signal exchanged with the mobile blind node and an estimated RSS, said estimation being based on the known or estimated transmitting power of the reference node and/or mobile blind node, the known position of the reference node, and estimated measurement positions of the mobile blind node;

for the fixed blind node, calculating a second difference between the measured RSS of the signal exchanged with the mobile blind node and an estimated RSS, said estimation being based on a known or estimated transmitting power of the fixed blind node and/or mobile blind node, an estimated position of the fixed blind node, and estimated measurement positions of the mobile blind node; and

determining the position of the fixed blind node by minimizing the sum of the plurality of first differences and the second differences by varying at least the estimated position of the fixed blind node and the estimated measurement positions of the mobile blind node;

the system further comprising:

for at least one reference node, calculating a third difference between the measured RSS of the signal exchanged with the fixed blind node and an estimated RSS, said estimation being based on a known or estimated transmitting power of the fixed blind node and/or the at least one reference node, an estimated position of the fixed blind node, and the known position of the at least one reference node;
said determining of the position of the fixed blind node comprising minimizing the sum of the plurality of first, second and third differences by varying at least the estimated position of the fixed blind node and the estimated measurement positions of the mobile blind node.

**Patentansprüche**

1. System zur Lokalisierung eines festen Blindknotens, der innerhalb eines Lokalisierungsbereichs zu lokalisieren ist, wobei das System umfasst:

einen mobilen Blindknoten, der dazu eingerichtet ist, sich in dem Lokalisierungsbereich zu bewegen und Kommunikation mit dem festen Blindknoten an verschiedenen Messpositionen des mobilen Blindknotens durchzuführen; und

eine Lokalisierungseinheit zum Bestimmen der Position des festen Blindknotens basierend auf der Kommunikation;

**dadurch gekennzeichnet, dass**

das System ferner eine Vielzahl von Referenzknoten umfasst, die im Lokalisierungsbereich angeordnet sind, wobei jeder eine bekannte Position aufweist und dazu eingerichtet ist, Kommunikation mit dem mobilen Blindknoten an verschiedenen Messpositionen des mobilen Blindknotens durchzuführen, wobei die Kommunikation zwischen jedem der Referenzknoten und dem mobilen Blindknoten und die Kommunikation zwischen dem festen Blindknoten und dem mobilen Blindknoten Austauschen eines Signals und Durchführen einer Empfangssignalstärke (Received Signal Strength), RSS, -Messung des ausgetauschten Signals umfasst;

wobei die Lokalisierungseinheit dazu eingerichtet ist, die Position des festen Blindknotens und die verschiedenen Messpositionen des mobilen Blindknotens unter Verwendung sowohl der Vielzahl von RSS-Messungen von Signalen, die zwischen dem festen Blindknoten und dem mobilen Blindknoten ausgetauscht werden, als auch der Vielzahl von RSS-Messungen von Signalen, die zwischen jedem der Vielzahl von Referenzknoten und dem mobilen Blindknoten ausgetauscht werden, zu bestimmen;

wobei die Messposition des mobilen Blindknotens während der RSS-Messungen unbekannt ist oder wobei die Messposition bekannt ist, aber nicht zum Bestimmen der Position des festen Blindknotens berücksichtigt wird.

2. System nach Anspruch 1, wobei die Lokalisierungseinheit dazu eingerichtet ist, die Position des festen Blindknotens und die verschiedenen Messpositionen des mobilen Blindknotens in einem Optimierungsprozess zu bestimmen; wobei der Optimierungsprozess vorzugsweise Variieren einer Schätzung der Position des festen Blindknotens und einer Schätzung der verschiedenen Messpositionen des mobilen Blindknotens umfasst, um eine Differenz zwischen den RSS-Messungen und unter Verwendung der geschätzten Positionen berechneten RSS-Werten zu minimieren.

3. System nach einem der vorhergehenden Ansprüche, wobei der feste Blindknoten und mindestens ein Referenzknoten dazu eingerichtet sind, ein entsprechendes Signal zu senden, wobei der mobile Blindknoten dazu eingerichtet ist, die Signale vom festen Blindknoten und dem mindestens einen Referenzknoten zu empfangen und die RSS-Messungen durchzuführen, oder wobei der mobile Blindknoten dazu eingerichtet ist, ein Signal zu senden, und wobei jeder der Vielzahl von Referenzknoten und der feste Blindknoten dazu eingerichtet sind, das Signal vom mobilen Blindknoten zu empfangen und die RSS-Messungen durchzuführen.

4. System nach einem der vorhergehenden Ansprüche, wobei mindestens einer der Referenzknoten dazu eingerichtet ist, ein Signal mit dem festen Blindknoten auszutauschen, wobei die Kommunikation zwischen dem mindestens einen Referenzknoten und dem festen Blindknoten Austauschen eines Signals und Durchführen einer Empfangssignalstärke (Received Signal Strength, RSS) -Messung des ausgetauschten Signals umfasst, wobei die Lokalisierungseinheit dazu eingerichtet ist, um die Position des festen Blindknotens unter Berücksichtigung der RSS-Messung des zwischen dem mindestens einen Referenzknoten und dem festen Blindknoten ausgetauschten Signals zu bestimmen;

wobei der feste Blindknoten vorzugsweise dazu eingerichtet, ein Signal zu übertragen, und wobei mindestens ein Referenzknoten dazu eingerichtet ist, das Signals vom festen Blindknoten zu empfangen und die RSS-Messung durchzuführen.

5. System nach einem der vorhergehenden Ansprüche, wobei die Sendeleistung des festen Blindknotens, des mobilen Blindknotens und/oder jedes der Vielzahl von Referenzknoten zumindest während mindestens eines Teils der RSS-Messungen konstant ist; und/oder
wobei die Lokalisierungseinheit dazu eingerichtet ist, die Messpositionen, an denen der mobile Blindknoten ein Signal für die RSS-Messungen empfängt und/oder sendet, während oder nach der Bestimmung der Position des festen Blindknotens zu bestimmen; und/oder
wobei das System dazu eingerichtet ist, gleichzeitig eine Vielzahl von festen Blindknoten zu lokalisieren und/oder wobei das System eine Vielzahl von mobilen Blindknoten umfasst.

6. System nach einem der vorhergehenden Ansprüche, wobei die Lokalisierungseinheit dazu eingerichtet ist, die Position des festen Blindknotens zu bestimmen durch:

Berechnen einer ersten Differenz zwischen der gemessenen RSS des mit dem mobilen Blindknoten ausgetauschten Signals und einer geschätzten RSS für jeden Referenzknoten, wobei die Schätzung auf der bekannten oder geschätzten Sendeleistung des Referenzknotens und/oder des mobilen Blindknotens, der bekannten Position des Referenzknotens und den geschätzten Messpositionen des mobilen Blindknotens basiert;
Berechnen einer zweiten Differenz zwischen der gemessenen RSS des mit dem mobilen Blindknoten ausgetauschten Signals und einer geschätzten RSS für den festen Blindknoten, wobei die Schätzung auf einer bekannten oder geschätzten Sendeleistung des festen Blindknotens und/oder des mobilen Blindknotens, einer geschätzten Position des festen Blindknotens und geschätzten Messpositionen des mobilen Blindknotens basiert; und
Bestimmen der Position des festen Blindknotens durch Minimieren der Summe aus der Vielzahl der ersten Differenzen und der zweiten Differenzen durch Variieren mindestens der geschätzten Position des festen Blindknotens und der geschätzten Messpositionen des mobilen Blindknotens;
wobei das System vorzugsweise ferner umfasst, sofern es von Anspruch 4 abhängt:

Berechnen einer dritten Differenz zwischen der gemessenen RSS des mit dem festen Blindknoten ausgetauschten Signals und einer geschätzten RSS für mindestens einen Referenzknoten, wobei die Schätzung auf einer bekannten oder geschätzten Sendeleistung des festen Blindknotens und/oder des mindestens einen Referenzknotens, einer geschätzten Position des festen Blindknotens und der bekannten Position des mindestens einen Referenzknotens basiert;
wobei das Bestimmen der Position des festen Blindknotens Minimieren der Summe der Vielzahl der ersten, zweiten und dritten Differenzen durch Variieren mindestens der geschätzten Position des festen Blindknotens und der geschätzten Messpositionen des mobilen Blindknotens umfasst;

wobei die geschätzte RSS des zwischen dem mobilen Blindknoten und dem festen Blindknoten, zwischen dem mobilen Blindknoten und jedem der Referenzknoten und/oder zwischen mindestens einem Referenzknoten und dem festen Blindknoten ausgetauschten Signals vorzugsweise unter Verwendung eines Ausbreitungsmodells berechnet wird, wobei das Ausbreitungsmodell vorzugsweise durch mindestens einen Parameter parametrisiert ist, wobei das Minimieren Variieren des mindestens einen Parameters umfasst und/oder wobei das Ausbreitungsmodell vorzugsweise das Log-Normal-Schattenmodell ist;
wobei das Minimieren vorzugsweise Variieren einer Sendeleistung des festen Blindknotens, einer Sendeleistung des mobilen Blindknotens und/oder einer Sendeleistung mindestens eines der Vielzahl von Referenzknoten umfasst.

7. System nach einem der vorhergehenden Ansprüche, wobei das Signal vom festen Blindknoten, das/die Signal(e) vom mobilen Blindknoten und/oder die Signale von den Referenzknoten jeweils ein elektromagnetisches Signal mit einer eindeutigen Kennung sind, wobei die Lokalisierungseinheit dazu eingerichtet ist, die Kennung dem gemessenen RSS des Signals mit dieser Kennung zuzuordnen, wobei das System ferner einen Speicher umfasst, der eine Korrelation zwischen den Kennungen und den entsprechenden Knoten speichert, wobei die Lokalisierungseinheit dazu ausgelegt ist, auf den Speicher zuzugreifen;
wobei der Speicher vorzugsweise weiterhin eine Korrelation zwischen den Referenzknoten und den Positionen dieser Knoten umfasst.

8. System nach einem der vorhergehenden Ansprüche, wobei der mobile Blindknoten, der feste Blindknoten und/oder mindestens ein Referenzknoten einen Empfänger zum Empfangen der Signale und zum Durchführen der RSS-Messungen und einen Sender zum Übertragen entsprechender RSS-Messdaten an die Lokalisierungseinheit umfasst, wobei mindestens einer der Referenzknoten und/oder der feste Blindknoten vorzugsweise einen Empfänger zum Empfangen der RSS-Messdaten umfasst, wobei der mindestens eine Referenzknoten und/oder der feste Blindknoten dazu eingerichtet ist/sind, die empfangenen RSS-Messdaten an die Lokalisierungseinheit weiterzuleiten, wobei, soweit abhängig von Anspruch 7, die RSS-Messdaten vorzugsweise mindestens eine RSS-Messung und die Kennung umfassen, die dem Knoten entspricht, von dem das gesendete Signal gemessen wurde; und/oder wobei jeder der Referenzknoten, der mobile Blindknoten und/oder der feste Blindknoten dazu eingerichtet sind, ihre Signale in verschiedenen Zeitschlitzen zu übertragen; und/oder

wobei der Lokalisierungsbereich als ein Bereich bestimmt wird, der durch die am weitesten außen liegenden Referenzknoten definiert ist.

9. Mobiler Blindknoten, der zur Verwendung in einem System zur Lokalisierung eines festen Blindknotens, wie es in einem der vorhergehenden Ansprüche definiert ist, eingerichtet ist, wobei der mobile Blindknoten einen Empfänger zum Empfangen eines elektromagnetischen Signals mit einer eindeutigen Kennung von einem Knoten und zum Durchführen einer RSS-Messung auf dem Signal und einen Sender zum Übertragen entsprechender RSS-Messdaten an eine Lokalisierungseinheit umfasst, wobei die RSS-Messdaten die RSS-Messung und die eindeutige Kennung umfassen, worin der mobile Blindknoten vorzugsweise in einem Mobiltelefon implementiert ist;

wobei der mobile Blindknoten vorzugsweise zur Verwendung in dem System nach Anspruch 6 eingerichtet ist, wobei der mobile Blindknoten sowohl die Lokalisierungseinheit als auch den Speicher umfasst.

10. Lokalisierungseinheit, die zur Verwendung in einem System zur Lokalisierung eines festen Blindknotens, wie es in einem der Ansprüche 1-8 definiert ist, eingerichtet ist;

**dadurch gekennzeichnet, dass**

die Lokalisierungseinheit dazu eingerichtet ist, eine Vielzahl von RSS-Messungen von Signalen, die zwischen dem festen Blindknoten und dem mobilen Blindknoten ausgetauscht werden, und eine Vielzahl von RSS-Messungen von Signalen, die zwischen jedem der Vielzahl von Referenzknoten und dem mobilen Blindknoten ausgetauscht werden, zu empfangen;

wobei die Lokalisierungseinheit dazu eingerichtet ist, die Position des festen Blindknotens und die verschiedenen Messpositionen des mobilen Blindknotens unter Verwendung sowohl der Vielzahl von RSS-Messungen von Signalen, die zwischen dem festen Blindknoten und dem mobilen Blindknoten ausgetauscht werden, als auch der Vielzahl von RSS-Messungen von Signalen, die zwischen jedem der Vielzahl von Referenzknoten und dem mobilen Blindknoten ausgetauscht werden, zu bestimmen;

wobei die Messposition des mobilen Blindknotens während der RSS-Messungen unbekannt ist oder wobei die Messposition bekannt ist, aber nicht zum Bestimmen der Position des festen Blindknotens berücksichtigt wird.

11. Referenzknoten, der zur Verwendung in einem System zur Lokalisierung eines festen Blindknotens, wie es in einem der Ansprüche 1-8 definiert ist, eingerichtet ist, wobei der Referenzknoten einen Empfänger zum Empfangen eines elektromagnetischen Signals mit einer eindeutigen Kennung von einem Knoten und zum Durchführen einer RSS-Messung auf dem Signal und einen Sender zum Übertragen entsprechender RSS-Messdaten an eine Lokalisierungseinheit umfasst, wobei die RSS-Messdaten die RSS-Messung und die eindeutige Kennung umfassen.

12. Verfahren zur Lokalisierung eines festen Blindknotens, der innerhalb eines Lokalisierungsbereichs zu lokalisieren ist, wobei das Verfahren umfasst:

Bereitstellen einer Vielzahl von Referenzknoten, die im Lokalisierungsbereich angeordnet sind und jeweils eine bekannte Position aufweisen;

Bereitstellen eines mobilen Blindknotens;

Bewegen des mobilen Blindknotens durch den Lokalisierungsbereich und gleichzeitiges Messen der Empfangssignalstärke (Received Signal Strength, RSS) von Signalen, die zwischen jedem der Referenzknoten und dem mobilen Blindknoten ausgetauscht werden, und von Signalen, die zwischen dem festen Blindknoten und dem mobilen Blindknoten ausgetauscht werden; und

Bestimmen der Position des festen Blindknotens und der verschiedenen Messpositionen des mobilen Blindknotens unter Verwendung sowohl der Vielzahl von RSS-Messungen von Signalen, die zwischen dem festen Blindknoten und dem mobilen Blindknoten ausgetauscht werden, als auch der Vielzahl von RSS-Messungen von Signalen, die zwischen jedem der Vielzahl von Referenzknoten und dem mobilen Blindknoten ausgetauscht werden;

wobei die Messposition des mobilen Blindknotens während der RSS-Messungen unbekannt ist oder wobei die Messposition bekannt ist, aber nicht zum Bestimmen der Position des festen Blindknotens berücksichtigt wird.

**13.** Verfahren nach Anspruch 12, wobei das Bestimmen der Position des festen Blindknotens und der verschiedenen Messpositionen des mobilen Blindknotens in einem Optimierungsprozess durchgeführt wird, wobei der Optimierungsprozess vorzugsweise Variieren einer Schätzung der Position des festen Blindknotens und einer Schätzung der verschiedenen Messpositionen des mobilen Blindknotens umfasst, um eine Differenz zwischen den RSS-Messungen und unter Verwendung der Schätzungen berechneten RSS-Werten zu minimieren, und wobei der Optimierungsprozess ferner vorzugsweise umfasst:

Berechnen einer ersten Differenz zwischen der gemessenen RSS des mit dem mobilen Blindknoten ausgetauschten Signals und einer geschätzten RSS für jeden Referenzknoten, wobei die Schätzung auf einer bekannten oder geschätzten Sendeleistung des Referenzknotens und/oder des mobilen Blindknotens, einer bekannten Position des Referenzknotens und einer geschätzten Messposition des mobilen Blindknotens basiert;
Berechnen einer zweiten Differenz zwischen der gemessenen RSS des mit dem mobilen Blindknoten ausgetauschten Signals und einer geschätzten RSS für den festen Blindknoten, wobei die Schätzung auf einer bekannten oder geschätzten Sendeleistung des festen Blindknotens und/oder des mobilen Blindknotens, einer geschätzten Position des festen Blindknotens und einer geschätzten Messposition des mobilen Blindknotens basiert; und
Bestimmen der Position des festen Blindknotens durch Minimieren der Summe der Vielzahl der ersten Differenzen und der zweiten Differenz durch Variieren mindestens der geschätzten Position des festen Blindknotens und der geschätzten Messpositionen des mobilen Blindknotens.

**14.** System zur Lokalisierung eines festen Blindknotens, der innerhalb eines Lokalisierungsbereichs zu lokalisieren ist, wobei das System umfasst:

einen mobilen Blindknoten, der dazu eingerichtet ist, sich in dem Lokalisierungsbereich zu bewegen und Kommunikation mit dem festen Blindknoten an verschiedenen Messpositionen des mobilen Blindknotens durchzuführen; und
eine Lokalisierungseinheit zum Bestimmen der Position des festen Blindknotens basierend auf der Kommunikation;
**dadurch gekennzeichnet, dass**
das System ferner eine Vielzahl von Referenzknoten umfasst, die im Lokalisierungsbereich angeordnet sind, wobei jeder eine bekannte Position aufweist und dazu eingerichtet ist, Kommunikation mit dem mobilen Blindknoten an verschiedenen Messpositionen des mobilen Blindknotens durchzuführen, wobei die Kommunikation zwischen jedem der Referenzknoten und dem mobilen Blindknoten und die Kommunikation zwischen dem festen Blindknoten und dem mobilen Blindknoten Austauschen eines Signals und Durchführen einer Empfangssignalstärke (Received Signal Strength, RSS) -Messung des ausgetauschten Signals umfasst;
wobei die Lokalisierungseinheit dazu eingerichtet ist, die Position des festen Blindknotens und die verschiedenen Messpositionen des mobilen Blindknotens unter Verwendung sowohl der Vielzahl von RSS-Messungen von Signalen, die zwischen dem festen Blindknoten und dem mobilen Blindknoten ausgetauscht werden, als auch der Vielzahl von RSS-Messungen von Signalen, die zwischen jedem der Vielzahl von Referenzknoten und dem mobilen Blindknoten ausgetauscht werden, zu bestimmen;
wobei mindestens einer der Referenzknoten dazu eingerichtet ist, ein Signal mit dem festen Blindknoten auszutauschen, wobei die Kommunikation zwischen dem mindestens einen Referenzknoten und dem festen Blindknoten Austauschen eines Signals und Durchführen einer Empfangssignalstärke (Received Signal Strength, RSS) -Messung des ausgetauschten Signals umfasst, wobei die Lokalisierungseinheit dazu eingerichtet ist, die Position des festen Blindknotens unter Berücksichtigung der RSS-Messung des zwischen dem mindestens einen Referenzknoten und dem festen Blindknoten ausgetauschten Signals zu bestimmen.

**15.** System nach Anspruch 14, wobei die Messposition des mobilen Blindknotens während der RSS-Messungen unbekannt ist oder wobei die Messposition bekannt ist, aber nicht berücksichtigt wird, um die Position des festen Blindknotens zu bestimmen; und/oder
wobei die Lokalisierungseinheit dazu eingerichtet ist, die Position des festen Blindknotens und die verschiedenen Messpositionen des beweglichen Blindknotens in einem Optimierungsprozess zu bestimmen, wobei der Optimierungsprozess vorzugsweise Variieren einer Schätzung der Position des festen Blindknotens und einer Schätzung der verschiedenen Messpositionen des beweglichen Blindknotens umfasst, um eine Differenz zwischen den RSS-Messungen und unter Verwendung der geschätzten Positionen berechneten RSS-Werten zu minimieren, und wobei die Lokalisierungseinheit bevorzugter dazu eingerichtet ist, die Position des festen Blindknotens zu bestimmen durch:

Berechnen einer ersten Differenz zwischen der gemessenen RSS des mit dem mobilen Blindknoten ausgetauschten Signals und einer geschätzten RSS für jeden Referenzknoten, wobei die Schätzung auf der bekannten oder geschätzten Sendeleistung des Referenzknotens und/oder des mobilen Blindknotens, der bekannten Position des Referenzknotens und den geschätzten Messpositionen des mobilen Blindknotens basiert;

Berechnen einer zweiten Differenz zwischen der gemessenen RSS des mit dem mobilen Blindknoten ausgetauschten Signals und einer geschätzten RSS für den festen Blindknoten, wobei die Schätzung auf einer bekannten oder geschätzten Sendeleistung des festen Blindknotens und/oder des mobilen Blindknotens, einer geschätzten Position des festen Blindknotens und geschätzten Messpositionen des mobilen Blindknotens basiert; und

Bestimmen der Position des festen Blindknotens durch Minimieren der Summe der Vielzahl der ersten Differenzen und der zweiten Differenzen durch Variieren mindestens der geschätzten Position des festen Blindknotens und der geschätzten Messpositionen des mobilen Blindknotens;

wobei das System ferner umfasst:

Berechnen einer dritten Differenz zwischen der gemessenen RSS des mit dem festen Blindknoten ausgetauschten Signals und einer geschätzten RSS für mindestens einen Referenzknoten, wobei die Schätzung auf einer bekannten oder geschätzten Sendeleistung des festen Blindknotens und/oder des mindestens einen Referenzknotens, einer geschätzten Position des festen Blindknotens und der bekannten Position des mindestens einen Referenzknotens basiert;

wobei das Bestimmen der Position des festen Blindknotens Minimieren der Summe der Vielzahl der ersten, zweiten und dritten Differenzen durch Variieren mindestens der geschätzten Position des festen Blindknotens und der geschätzten Messpositionen des mobilen Blindknotens umfasst.

## Revendications

1. Système de localisation d'un noeud aveugle fixe à localiser à l'intérieur d'une zone de localisation, le système comprenant :

   un noeud aveugle mobile configuré pour se déplacer dans la zone de localisation et pour réaliser une communication avec le noeud aveugle fixe à différentes positions de mesure du noeud aveugle mobile ; et
   une unité de localisation pour déterminer la position du noeud aveugle fixe sur la base de la communication ;
   **caractérisé en ce que**
   le système comprend en outre une pluralité de noeuds de référence agencés dans la zone de localisation, chacun ayant une position connue et étant configuré pour réaliser une communication avec le noeud aveugle mobile à différentes positions de mesure du noeud aveugle mobile, dans lequel ladite communication entre chacun des noeuds de référence et le noeud aveugle mobile et ladite communication entre le noeud aveugle fixe et le noeud aveugle mobile comprend l'échange d'un signal et la réalisation d'une mesure d'intensité du signal reçu, RSS, du signal échangé ;
   dans lequel l'unité de localisation est configurée pour déterminer ladite position du noeud aveugle fixe et lesdites différentes positions de mesure du noeud aveugle mobile en utilisant à la fois la pluralité de mesures RSS des signaux échangés entre le noeud aveugle fixe et le noeud aveugle mobile et la pluralité de mesures RSS des signaux échangés entre chacun de la pluralité des noeuds de référence et le noeud aveugle mobile ;
   dans lequel la position de mesure du noeud aveugle mobile est inconnue pendant lesdites mesures RSS ou dans lequel la position de mesure est connue mais n'est pas prise en compte pour déterminer la position du noeud aveugle fixe.

2. Système selon la revendication 1, dans lequel l'unité de localisation est configurée pour déterminer ladite position du noeud aveugle fixe et lesdites différentes positions de mesure du noeud aveugle mobile dans un processus d'optimisation ;
   dans lequel le processus d'optimisation comprend de préférence la variation d'une estimation de la position du noeud aveugle fixe et d'une estimation des différentes positions de mesure du noeud aveugle mobile pour minimiser une différence entre les mesures RSS et les valeurs RSS calculées à l'aide desdites positions estimées.

3. Système selon l'une quelconque des revendications précédentes, dans lequel le noeud aveugle fixe et au moins un noeud de référence sont configurés pour émettre un signal respectif, dans lequel le noeud aveugle mobile est configuré pour recevoir les signaux provenant du noeud aveugle fixe et de l'au moins un noeud de référence et pour réaliser lesdites mesures RSS ou dans lequel le noeud aveugle mobile est configuré pour émettre un signal, et dans lequel chacun de la pluralité de noeuds de référence et le noeud aveugle fixe sont configurés pour recevoir le signal provenant du noeud aveugle mobile et pour réaliser lesdites mesures RSS.

4. Système selon l'une quelconque des revendications précédentes, dans lequel au moins un des noeuds de référence est configuré pour échanger un signal avec le noeud aveugle fixe, ladite communication entre l'au moins un noeud de référence et le noeud aveugle fixe comprenant l'échange d'un signal et la réalisation d'une mesure d'intensité du signal reçu (RSS) du signal échangé, dans lequel

l'unité de localisation est configurée pour déterminer la position du noeud aveugle fixe en prenant en compte la mesure RSS du signal échangé entre l'au moins un noeud de référence et le noeud aveugle fixe ;

dans lequel le noeud aveugle fixe est de préférence configuré pour émettre un signal, et dans lequel au moins un noeud de référence est configuré pour recevoir le signal provenant du noeud aveugle fixe et pour réaliser ladite mesure RSS.

5. Système selon l'une quelconque des revendications précédentes, dans lequel la puissance d'émission du noeud aveugle fixe, du noeud aveugle mobile et/ou de chacun de la pluralité de noeuds de référence est au moins constante pendant au moins une partie des mesures RSS ; et/ou

dans lequel l'unité de localisation est configurée pour déterminer les positions de mesure auxquelles le noeud aveugle mobile a reçu et/ou émis un signal pour lesdites mesures RSS pendant ou après la détermination de la position du noeud aveugle fixe ; et/ou

dans lequel le système est configuré pour localiser simultanément une pluralité de noeuds aveugles fixes et/ou dans lequel le système comprend une pluralité de noeuds aveugles mobiles.

6. Système selon l'une quelconque des revendications précédentes, dans lequel l'unité de localisation est configurée pour déterminer la position du noeud aveugle fixe comme suit :

pour chaque noeud de référence, en calculant une première différence entre la RSS mesurée du signal échangé avec le noeud aveugle mobile et une RSS estimée, ladite estimation étant basée sur la puissance d'émission connue ou estimée du noeud de référence et/ou du noeud aveugle mobile, la position connue du noeud de référence, et des positions de mesure estimées du noeud aveugle mobile ;

pour le noeud aveugle fixe, en calculant une deuxième différence entre la RSS mesurée du signal échangé avec le noeud aveugle mobile et une RSS estimée, ladite estimation étant basée sur une puissance d'émission connue ou estimée du noeud aveugle fixe et/ou du noeud aveugle mobile, une position estimée du noeud aveugle fixe, et des positions de mesure estimées du noeud aveugle mobile ; et

en déterminant la position du noeud aveugle fixe en minimisant la somme de la pluralité de premières différences et des deuxièmes différences en faisant varier au moins la position estimée du noeud aveugle fixe et les positions de mesure estimées du noeud aveugle mobile ;

le système comprenant en outre de préférence, dans la mesure où il dépend de la revendication 4 :

pour au moins un noeud de référence, le calcul d'une troisième différence entre la RSS mesurée du signal échangé avec le noeud aveugle fixe et une RSS estimée, ladite estimation étant basée sur une puissance d'émission connue ou estimée du noeud aveugle fixe et/ou de l'au moins un noeud de référence, une position estimée du noeud aveugle fixe, et la position connue de l'au moins un noeud de référence ;

ladite détermination de la position du noeud aveugle fixe comprenant la minimisation de la somme de la pluralité de premières, deuxièmes et troisièmes différences en faisant varier au moins la position estimée du noeud aveugle fixe et les positions de mesure estimées du noeud aveugle mobile ;

dans lequel la RSS estimée du signal échangé entre le noeud aveugle mobile et le noeud aveugle fixe, entre le noeud aveugle mobile et chacun des noeuds de référence, et/ou entre au moins un noeud de référence et le noeud aveugle fixe est de préférence calculée à l'aide d'un modèle de propagation, dans lequel le modèle de propagation est de préférence paramétré par au moins un paramètre, dans lequel la minimisation comprend la variation de l'au moins un paramètre et/ou dans lequel le modèle de propagation est de préférence le modèle d'ombrage log-normal ;

dans lequel la minimisation comprend de préférence la variation d'au moins une d'une puissance d'émission du noeud aveugle fixe, d'une puissance d'émission du noeud aveugle mobile, et d'une puissance d'émission d'au moins un parmi la pluralité de noeuds de référence.

7. Système selon l'une quelconque des revendications précédentes, dans lequel le signal provenant du noeud aveugle fixe, le signal/les signaux provenant du noeud aveugle mobile, et/ou les signaux provenant des noeuds de référence sont chacun un signal électromagnétique portant un identifiant unique, dans lequel l'unité de localisation est configurée pour associer l'identifiant à la RSS mesurée du signal portant cet identifiant, le système comprenant en outre une mémoire enregistrant une corrélation entre les identifiants et les noeuds correspondants, ladite unité de localisation étant capable d'accéder à ladite mémoire ;

dans lequel la mémoire comprend en outre de préférence une corrélation entre les noeuds de référence et les positions de ces noeuds.

**8.** Système selon l'une quelconque des revendications précédentes, dans lequel le noeud aveugle mobile, le noeud aveugle fixe, et/ou au moins un noeud de référence comprend un récepteur pour recevoir les signaux et pour réaliser les mesures RSS et un émetteur pour émettre les données de mesure RSS correspondantes à l'unité de localisation, dans lequel au moins l'un des noeuds de référence et/ou le noeud aveugle fixe comprend de préférence un récepteur pour recevoir les données de mesure RSS, dans lequel ledit au moins un noeud de référence et/ou noeud aveugle fixe sont/est configuré(s) pour retransmettre les données de mesure RSS reçues à l'unité de localisation, dans lequel, dans la mesure où il dépend de la revendication 7, les données de mesure RSS comprennent de préférence au moins une mesure RSS et l'identifiant correspondant au noeud dont le signal émis a été mesuré ; et/ou

dans lequel chacun des noeuds de référence, le noeud aveugle mobile et/ou le noeud aveugle fixe sont configurés pour émettre leurs signaux dans des plages horaires différentes ; et/ou

dans lequel la zone de localisation est déterminée comme étant une zone définie par les noeuds de référence placés le plus à l'extérieur.

**9.** Noeud aveugle mobile configuré pour être utilisé dans un système de localisation d'un noeud aveugle fixe tel que défini dans l'une quelconque des revendications précédentes, dans lequel le noeud aveugle mobile comprend un récepteur pour recevoir un signal électromagnétique portant un identifiant unique en provenance d'un noeud et pour réaliser une mesure RSS sur ledit signal, et un émetteur pour émettre les données de mesure RSS correspondantes à une unité de localisation, lesdites données de mesure RSS comprenant ladite mesure RSS et ledit identifiant unique, dans lequel le noeud aveugle mobile est de préférence mis en oeuvre dans un téléphone portable ;

dans lequel le noeud aveugle mobile est de préférence configuré pour être utilisé dans le système tel que défini dans la revendication 6, dans lequel le noeud aveugle mobile comprend à la fois l'unité de localisation et la mémoire.

**10.** Unité de localisation configurée pour être utilisée dans un système de localisation d'un noeud aveugle fixe tel que défini dans l'une quelconque des revendications 1 à 8 ;

**caractérisée en ce que**

ladite unité de localisation est configurée pour recevoir une pluralité de mesures RSS des signaux échangés entre le noeud aveugle fixe et le noeud aveugle mobile et une pluralité de mesures RSS des signaux échangés entre chacun de la pluralité de noeuds de référence et le noeud aveugle mobile ;

dans laquelle l'unité de localisation est configurée pour déterminer ladite position du noeud aveugle fixe et lesdites différentes positions de mesure du noeud aveugle mobile en utilisant à la fois la pluralité de mesures RSS des signaux échangés entre le noeud aveugle fixe et le noeud aveugle mobile et la pluralité de mesures RSS des signaux échangés entre chacun de la pluralité de noeuds de référence et le noeud aveugle mobile ;

dans laquelle la position de mesure du noeud aveugle mobile est inconnue pendant lesdites mesures RSS ou dans laquelle la position de mesure est connue mais n'est pas prise en compte pour déterminer la position du noeud aveugle fixe.

**11.** Noeud de référence configuré pour être utilisé dans un système de localisation d'un noeud aveugle fixe tel que défini dans l'une quelconque des revendications 1 à 8, dans lequel le noeud de référence comprend un récepteur pour recevoir un signal électromagnétique portant un identifiant unique en provenance d'un noeud et pour réaliser une mesure RSS sur ledit signal, et un émetteur pour émettre les données de mesure RSS correspondantes à une unité de localisation, lesdites données de mesure RSS comprenant ladite mesure RSS et ledit identifiant unique.

**12.** Procédé de localisation d'un noeud aveugle fixe à localiser à l'intérieur d'une zone de localisation, le procédé comprenant :

la fourniture d'une pluralité de noeuds de référence agencés dans la zone de localisation, chacun ayant une position connue ;

la fourniture d'un noeud aveugle mobile ;

le déplacement du noeud aveugle mobile à travers la zone de localisation et la mesure simultanée de l'intensité du signal reçu (RSS) des signaux échangés entre chacun des noeuds de référence et le noeud aveugle mobile et des signaux échangés entre le noeud aveugle fixe et le noeud aveugle mobile ; et

la détermination de ladite position du noeud aveugle fixe et desdites différentes positions de mesure du noeud aveugle mobile en utilisant à la fois la pluralité de mesures RSS des signaux échangés entre le noeud aveugle fixe et le noeud aveugle mobile et la pluralité de mesures RSS des signaux échangés entre chacun de la pluralité de noeuds de référence et le noeud aveugle mobile ;

dans lequel la position de mesure du noeud aveugle mobile est inconnue pendant lesdites mesures RSS ou dans lequel la position de mesure est connue mais n'est pas prise en compte pour déterminer la position du noeud aveugle fixe.

**13.** Procédé selon la revendication 12, dans lequel ladite détermination de ladite position du noeud aveugle fixe et desdites différentes positions de mesure du noeud aveugle mobile est réalisée dans un processus d'optimisation, dans lequel le processus d'optimisation comprend de préférence la variation d'une estimation de la position du noeud aveugle fixe et d'une estimation des différentes positions de mesure du noeud aveugle mobile pour minimiser une différence entre les mesures RSS et les valeurs RSS calculées à l'aide desdites estimations, et dans lequel, plus préférablement, le processus d'optimisation comprend en outre :

pour chaque noeud de référence, le calcul d'une première différence entre la RSS mesurée du signal échangé avec le noeud aveugle mobile et une RSS estimée, ladite estimation étant basée sur une puissance d'émission connue ou estimée du noeud de référence et/ou du noeud aveugle mobile, une position connue du noeud de référence, et une position de mesure estimée du noeud aveugle mobile ;

pour le noeud aveugle fixe, le calcul d'une deuxième différence entre la RSS mesurée du signal échangé avec le noeud aveugle mobile et une RSS estimée, ladite estimation étant basée sur une puissance d'émission connue ou estimée du noeud aveugle fixe et/ou du noeud aveugle mobile, une position estimée du noeud aveugle fixe, et une position de mesure estimée du noeud aveugle mobile ; et

la détermination de la position du noeud aveugle fixe en minimisant la somme de la pluralité de premières différences et des deuxièmes différences en faisant varier au moins la position estimée du noeud aveugle fixe et les positions de mesure estimées du noeud aveugle mobile.

**14.** Système de localisation d'un noeud aveugle fixe à localiser à l'intérieur d'une zone de localisation, le système comprenant :

un noeud aveugle mobile configuré pour se déplacer dans la zone de localisation et pour réaliser une communication avec le noeud aveugle fixe à différentes positions de mesure du noeud aveugle mobile ; et

une unité de localisation pour déterminer la position du noeud aveugle fixe sur la base de la communication ;

**caractérisé en ce que**

le système comprend en outre une pluralité de noeuds de référence agencés dans la zone de localisation, chacun ayant une position connue et étant configuré pour réaliser une communication avec le noeud aveugle mobile à différentes positions de mesure du noeud aveugle mobile, dans lequel ladite communication entre chacun des noeuds de référence et le noeud aveugle mobile et ladite communication entre le noeud aveugle fixe et le noeud aveugle mobile comprend l'échange d'un signal et la réalisation d'une mesure d'intensité du signal reçu (RSS) du signal échangé ;

dans lequel l'unité de localisation est configurée pour déterminer ladite position du noeud aveugle fixe et lesdites différentes positions de mesure du noeud aveugle mobile en utilisant à la fois la pluralité de mesures RSS des signaux échangés entre le noeud aveugle fixe et le noeud aveugle mobile et la pluralité de mesures RSS des signaux échangés entre chacun de la pluralité de noeuds de référence et le noeud aveugle mobile ;

dans lequel au moins un des noeuds de référence est configuré pour échanger un signal avec le noeud aveugle fixe, ladite communication entre l'au moins un noeud de référence et le noeud aveugle fixe comprenant l'échange d'un signal et la réalisation d'une mesure d'intensité du signal reçu (RSS) du signal échangé, dans lequel l'unité de localisation est configurée pour déterminer la position du noeud aveugle fixe en prenant en compte la mesure RSS du signal échangé entre l'au moins un noeud de référence et le noeud aveugle fixe.

**15.** Système selon la revendication 14, dans lequel la position de mesure du noeud aveugle mobile est inconnue pendant lesdites mesures RSS ou dans lequel la position de mesure est connue mais n'est pas prise en compte pour déterminer la position du noeud aveugle fixe ; et/ou

dans lequel l'unité de localisation est configurée pour déterminer ladite position du noeud aveugle fixe et lesdites différentes positions de mesure du noeud aveugle mobile dans un processus d'optimisation, dans lequel le processus d'optimisation comprend de préférence la variation d'une estimation de la position du noeud aveugle fixe et d'une estimation des différentes positions de mesure du noeud aveugle mobile pour minimiser une différence entre les mesures RSS et les valeurs RSS calculées à l'aide desdites positions estimées, et dans lequel l'unité de localisation est plus préférablement configurée pour déterminer la position du noeud aveugle fixe comme suit :

pour chaque noeud de référence, en calculant une première différence entre la RSS mesurée du signal échangé avec le noeud aveugle mobile et une RSS estimée, ladite estimation étant basée sur la puissance d'émission connue ou estimée du noeud de référence et/ou du noeud aveugle mobile, la position connue du noeud de référence, et des positions de mesure estimées du noeud aveugle mobile ;

pour le noeud aveugle fixe, en calculant une deuxième différence entre la RSS mesurée du signal échangé avec le noeud aveugle mobile et une RSS estimée, ladite estimation étant basée sur une puissance d'émission connue ou estimée du noeud aveugle fixe et/ou du noeud aveugle mobile, une position estimée du noeud aveugle fixe, et des positions de mesure estimées du noeud aveugle mobile ; et

en déterminant la position du noeud aveugle fixe en minimisant la somme de la pluralité de premières différences et des deuxièmes différences en faisant varier au moins la position estimée du noeud aveugle fixe et les positions de mesure estimées du noeud aveugle mobile ;

le système comprenant en outre :

pour au moins un noeud de référence, le calcul d'une troisième différence entre la RSS mesurée du signal échangé avec le noeud aveugle fixe et une RSS estimée, ladite estimation étant basée sur une puissance d'émission connue ou estimée du noeud aveugle fixe et/ou de l'au moins un noeud de référence, une position estimée du noeud aveugle fixe, et la position connue de l'au moins un noeud de référence ;

ladite détermination de la position du noeud aveugle fixe comprenant la minimisation de la somme de la pluralité de premières, deuxièmes et troisièmes différences en faisant varier au moins la position estimée du noeud aveugle fixe et les positions de mesure estimées du noeud aveugle mobile.

## FIG. 1

## FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUMATHI R et al.** RSS-based location estimation in mobility assisted wireless sensor networks. *6th International Conference on Intelligent Data Acquisition and Advanced Computing Systems (IDAACS),* September 2011, 848-852

- **DIL B et al.** RSS-based self-adaptive localization in dynamic environments. *IEEE International Conference on the Internet of Things (IOT),* October 2012, 55-62